Europäisches Patentamt

European Patent Office

Office européen des brevets

(19)

(11) **EP 0 958 510 B1**

(12) **FASCICULE DE BREVET EUROPEEN**

(45) Date de publication et mention
de la délivrance du brevet:
**26.03.2003 Bulletin 2003/13**

(21) Numéro de dépôt: **98958329.9**

(22) Date de dépôt: **04.12.1998**

(51) Int Cl.$^7$: **G01V 1/28**

(86) Numéro de dépôt international:
**PCT/FR98/02625**

(87) Numéro de publication internationale:
**WO 99/030186 (17.06.1999 Gazette 1999/24)**

(54) **METHODE DE DETECTION D'UNE DISCONTINUITE GEOLOGIQUE PRESENTE DANS UN MILIEU PAR UTILISATION DU FLUX OPTIQUE**

VERFAHREN ZUR FESTSTELLUNG EINER GEOLOGISCHEN DISKONTINUITÄT IN EINEM MEDIUM MITTELS OPTISCHER FLUSS

METHOD FOR DETECTING GEOLOGICAL DISCONTINUITIES IN AN ENVIRONMENT USING AN OPTICAL FLOW

(84) Etats contractants désignés:
**DE FR GB IT NL**

(30) Priorité: **08.12.1997 FR 9715486**

(43) Date de publication de la demande:
**24.11.1999 Bulletin 1999/47**

(73) Titulaire: **Elf Exploration Production
92400 Courbevoie (FR)**

(72) Inventeurs:
• **KESKES, Naamen
F-64000 Pau (FR)**
• **PAUGET, Fabien
F-64000 Pau (FR)**

(74) Mandataire: **Levy, David et al
c/o S.A. Fédit-Loriot
38, avenue Hoche
75008 Paris (FR)**

(56) Documents cités:
**US-A- 5 503 153**

• **HERLIN I L ET AL: "Image processing for sequences of oceanographic images" COMPUTER GRAPHICS TECHNOLOGY FOR THE EXPLORATION OF THE SEA. CES '95, ROSTOCK, GERMANY, MAY 1995, vol. 7, no. 3, pages 169-176, XP002077814 ISSN 1049-8907, Journal of Visualization and Computer Animation, July-Sept. 1996, Wiley, UK**
• **HERLIN L L ET AL: "Performing segmentation of ultrasound images using temporal information" PROCEEDINGS. 1993 IEEE COMPUTER SOCIETY CONFERENCE ON COMPUTER VISION AND PATTERN RECOGNITION (CAT. NO.93CH3309-2), PROCEEDINGS OF IEEE CONFERENCE ON COMPUTER VISION AND PATTERN RECOGNITION, NEW YORK, NY, USA, 15-17 JUNE 1993, pages 373-378, XP000416328 ISBN 0-8186-3880-X, 1993, Los Alamitos, CA, USA, IEEE Comput. Soc. Press, USA**

**Description**

La présente invention concerne une méthode de détection d'une discontinuité géologique présente dans un milieu qui peut être représenté sous la forme d'un bloc sismique ou à partir de plusieurs sections sismiques dudit milieu.

Quel que soit le type de campagne sismique à deux dimensions (2D) ou à trois dimensions (3D), on utilise une ou plusieurs sources émettrices d'ondes qui sont disposées à la surface dudit milieu, et des récepteurs, qui sont également disposés à la surface dudit milieu et qui reçoivent et enregistrent les ondes élastiques qui se réfléchissent sur chaque réflecteur constitué par l'interface entre deux formations géologiques de nature différente, ladite surface pouvant être la surface du sol ou de la mer. L'ensemble des enregistrements obtenus permet de réaliser une représentation ou image du milieu en 2D ou 3D. En général, les interférences, les réflexions multiples ou les artefacts introduisent des bruits, des indéterminations, qui rendent parfois l'image du sous-sol difficilement interprétable même après des traitements plus ou moins complexes. De ce fait, les interprétateurs ne réussissent pas toujours à repérer et positionner avec certitude les structures recherchées telles que les discontinuités constituées notamment par des failles, des chenaux, etc... Pour améliorer l'interprétation des images sismiques, les spécialistes interpolent les événements sismiques fiables et détectés dans les plans voisins en utilisant notamment le procédé connu sous la désignation du procédé des critères de continuité.

Lorsqu'on dispose d'un bloc sismique représentatif du milieu à explorer, il est courant de réaliser une visualisation animée du bloc sismique ; les événements cohérents, qui ont une certaine étendue spatiale et temporelle, se distinguent du bruit environnant, ce qui permet d'éliminer certaines incertitudes de détection et de positionnement. En effet, au cours de cette visualisation, l'oeil humain, par effet de rémanence, conserve sur la rétine pendant un certain temps l'image qui a été visualisée, ce qui lui permet d'analyser simultanément plusieurs images d'une séquence. Lorsqu'une configuration ou événement sismique pertinents, visible sur une image, n'est qu'un accident négligeable, on peut supposer qu'elle disparaîtra rapidement ; inversement, si cette configuration représente une fraction d'un événement remarquable, alors il y a de fortes chances de la retrouver dans les images voisines. Ainsi, l'oeil humain perçoit localement et de manière fiable la continuité temporelle des événements ; cette continuité n'étant pour ainsi dire jamais orientée dans la direction de visualisation, il en découle en tout point une impression de déplacement, de mouvement.

Des calculs de flux optique pour certaines images ont été proposés, par exemple pour une séquence d'images classique dans laquelle il n'y a qu'une seule direction de visualisation intelligible. De tels calculs sont définis par exemple dans "Inverse perspective mapping simplifies optical flow computation and obstacle detection" de H.A. MALLOT et al., Biological Cybernetics, 64, 1991, pages 177-185 ; ou dans "on the estimation of optical flow : relations between different approaches and some new result" de H.H. NAGEL, Artificial Intelligence, 33, 1987, pages 299-324. Par flux optique, on entend une distribution spatiale des vitesses apparentes qui sont observées pendant l'animation d'une séquence d'images. Le flux optique, qui fournit en tout point le déplacement observé, est de ce fait une représentation possible de la perception dynamique.

Il faut toutefois noter qu'une telle séquence d'images classique représente un monde solide, indéformable, dans lequel les notions d'objets, de vide et de transparence sont omniprésentes ; de plus, la seule direction de visualisation intelligible est la direction d'acquisition.

Parmi les méthodes utilisant le calcul du flux optique et appliquées aux images non sismiques, on peut citer celles qui compensent le manque d'information locale en interpolant les estimations de vitesses faites au niveau des contours (K.Y. WOHN et al. "A contour-based recovery of image flow : itérative transformation method" : IEEE Transactions on Pattern Analysis and Machine intelligence, vol. 13, n° 8, 1991, pages 746-760) ou directement sur des régions de grandes tailles (D.P. KOTTLE et al., "Motion Estimation via Cluster Matching" : IEEE transaction on Pattern Analysis and Machine Intelligence, vol. 16, n° 1, Nov. 1994, pages 1128-1132). Ces méthodes sont peu précises et nécessitent des traitements préalables coûteux tels que la détection des contours ou la segmentation en régions. De plus, les images de base traitées par le flux optique sont de dimensions réduites.

Un exemple d'utilisation d'une méthode de flux optique en géophysique est donné dans "Image processing for sequences of oceanographic images" de I.L. HERLIN et al., Journal of visualization and computer animation, 7, (1996), pages 169-176.

Dans une séquence d'images sismiques, les données sont dites "pleines", car elles représentent une partie de l'intérieur d'un solide, en l'occurrence le sous-sol. Dans ces types de données, toutes les notions précédentes sont abandonnées, le vide n'existant plus et l'espace pouvant être visualisé dans toutes les directions. Une telle isotropie permet de disposer d'une infinité d'observations différentes et donc d'un nombre considérable d'informations.

La présente invention a pour but de quantifier la perception dynamique donnée par le calcul d'un flux optique d'une image en l'appliquant à une ou des images sismiques afin de mettre en valeur des événements tridimensionnels difficilement perceptibles sur un plan fixe et faciliter ainsi le travail des interprétateurs.

Les images sismiques présentent un caractère texturé par opposition aux images constituées de larges régions monochromes, et de ce fait, les variations locales d'intensité sont en tout point pertinentes. Les méthodes rappelées précédemment sont peu adaptées au calcul du flux optique des images sismiques.

Un objet de la présente invention est une méthode de détection d'une discontinuité géologique dans un bloc sismique, caractérisée en ce qu'elle consiste à :

- sélectionner dans le bloc sismique au moins une section comprenant au moins une discontinuité, ladite section constituant une image sismique,
- calculer un flux optique brut sur ladite image sismique de manière à obtenir une première représentation du flux optique dans laquelle la discontinuité constitue un front de mouvement, et à
- lisser par le procédé des nuées dynamiques non supervisé ladite représentation du flux optique, de manière à obtenir une deuxième représentation du flux optique dans laquelle ladite discontinuité présente des contrastes accentués.

Un avantage de la présente invention réside dans le fait que le lissage sélectionné permet d'attribuer à chaque pixel de l'image sismique de base la vitesse de plus forte probabilité, c'est-à-dire la mieux représentée localement.

Le lissage par nuées dynamiques conduit à des résultats pertinents quelle que soit la configuration spatiale du flux optique et d'une manière non supervisée. L'utilisation conjuguée du flux optique et du lissage par nuées dynamiques permet de détecter des frontières précises et continues.

D'autres avantages et caractéristiques ressortiront mieux à la lecture de la description de la méthode selon l'invention appliquée à une discontinuité ou événement sismique constituée par une faille, ainsi que des dessins annexés sur lesquels :

- la figure 1 est une section sismique du sous-sol du milieu exploré,
- la figure 2 est une image ou représentation du flux optique calculé sur l'image sismique de la figure 1,
- la figure 3 est une représentation de l'image du flux optique de la figure 2, après lissage,
- la figure 4 est une représentation de la variance du flux optique lissé surimposée sur la section sismique de la figure 1,
- les figures 5 à 8 représentent partiellement la section sismique de la figure 1 sur laquelle une fenêtre de calcul est déplacée,
- les figures 9 à 12 représentent la répartition des nuées de points correspondant respectivement aux figures 5 à 8,
- la figure 13 représente l'évolution des composantes U et V de la vitesse obtenue suite à un lissage moyenne selon une trajectoire $P_1$-$P_4$,
- la figure 14 représente l'évolution des composantes U et V de la vitesse obtenue suite à un lissage par nuées dynamiques selon la même trajectoire $P_1$-$P_4$.

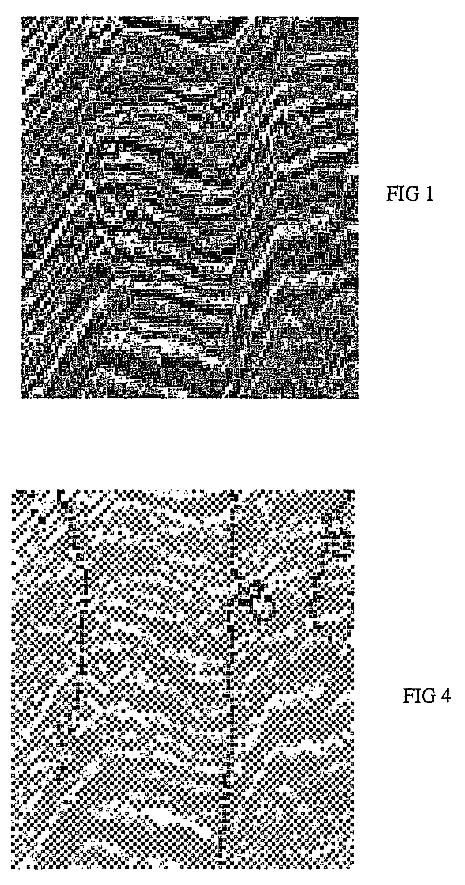

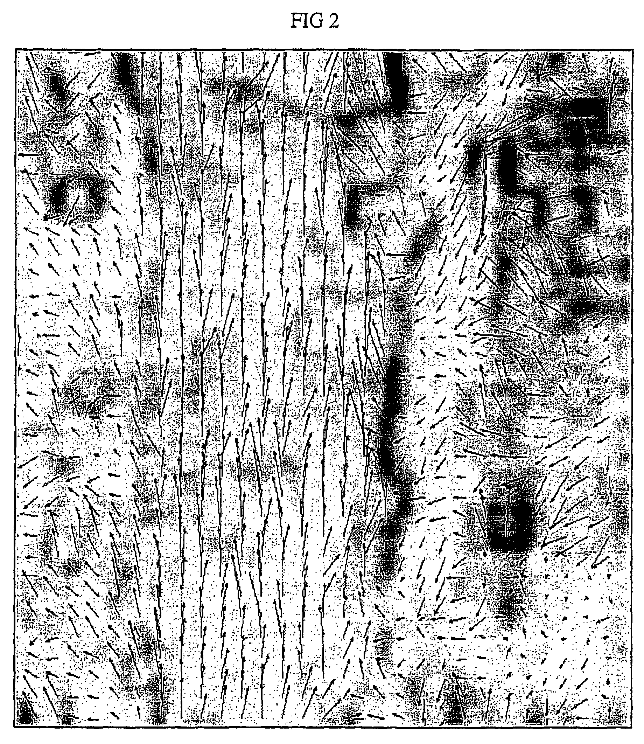

Le flux optique calculé sur une section ou image sismique (figure 1) obtenue à partir d'un bloc sismique contenant un événement sismique du type discontinuité, tel qu'une faille, produit une image flux optique brut (figure 2) constituée par des vecteurs flux de composantes U et V. Chaque vecteur flux optique correspond à un pixel de l'image sismique. Dans le flux optique calculé, les failles constituent des frontières entre des régions de mouvements différents.

Sur l'image sismique de la figure 1, un interprétateur considère qu'elle contient deux principales failles mais sans pour autant qu'il puisse préciser les bords desdites failles, qui sont le lieu d'un front de mouvement comme le préjuge le calcul du flux optique correspondant de la figure 2. Toutefois, les variations spatiales du flux optique brut de la figure 2 sont trop importantes pour qu'un calcul de variance sur ledit flux optique brut puisse révéler correctement ces failles.

Une première caractéristique de la présente invention réside dans la sélection du mode de calcul du flux optique à appliquer sur la section sismique de la figure 1. Selon l'invention, on sélectionne, de préférence, le calcul mettant en oeuvre le procédé du champ constant tel que décrit dans l'article de J.R. BERGEN et al., intitulé "A three frame Algorithm for Estimating Two component Image Motion", paru dans IEEE Transactions on Pattern Analysis and Machine Intelligence, Vol. 14, No 9, Sept. 1992, pages 886 à 896.

Les formules qui permettent de calculer les composantes U et V du flux optique en tout point par le procédé du champ constant sont les suivantes :

$$U = \frac{\sum_R \left(E_x E_y\right) x \sum_R \left(E_y E_t\right) - \sum_R \left(E_x E_t\right) x \sum_R \left(E_y E_y\right)}{\sum_R \left(E_x E_x\right) x \sum_R \left(E_y E_y\right) - \sum_R \left(E_x E_y\right) x \sum_R \left(E_x E_y\right)}$$

$$V = \frac{\sum_R \left(E_x E_y\right) x \sum_R \left(E_x E_t\right) - \sum_R \left(E_y E_t\right) x \sum_R \left(E_x E_x\right)}{\sum_R \left(E_x E_x\right) x \sum_R \left(E_y E_y\right) - \sum_R \left(E_x E_y\right) x \sum_R \left(E_x E_y\right)}$$

dans lesquelles :

R est un voisinage prédéterminé qu'on se fixe pour chaque point de l'image sismique,

$E_x$, $E_y$ et $E_t$ sont respectivement les gradients d'intensité dans des directions orthogonales x, y et t.

Une autre caractéristique de la présente invention consiste à lisser ladite image du flux optique brut de la figure 2, de manière à atténuer les variations spatiales du flux optique de chaque côté des failles, tout en accentuant les contrastes au niveau desdites failles.

Dans la recherche des failles, la contrainte de localisation est primordiale et le lissage sélectionné doit par conséquent préserver le mieux possible les frontières délimitées par lesdites failles. Dans ces conditions, on comprend que les filtres de type moyenne glissante et gaussien ne peuvent être appliqués à l'image du flux optique brut, car l'estimation locale d'une vitesse moyenne est peu représentative du champ de vecteurs bipolaires caractérisant les deux tendances dynamiques au niveau de la faille.

Selon la présente invention, on applique au flux optique brut un lissage qui attribue à chaque pixel de l'image sismique la vitesse de plus forte probabilité ou la mieux représentée localement. On a trouvé que le lissage qui satisfaisait cette condition est le lissage par nuées dynamiques non supervisé qui donne d'excellents résultats, quelle que soit la configuration spatiale du champ de vitesses.

Pour mettre en oeuvre le lissage par nuées dynamiques, on recherche le couple (P*,L*) optimal qui minimise l'inertie intra-classe, dans lequel P est une partition en plusieurs classes de l'espace d'étude qui n'est autre que l'espace des vitesses, et L est une représentation de P (par centre de gravité). Pour cela, on utilise de manière itérative, d'une part, une fonction g de représentation (calcul des centres de gravité) qui permet de calculer L à partir de P connu, et d'autre part, une fonction f d'affectation qui permet d'affecter chaque point de l'espace au centre de gravité le plus proche et de calculer P à partir de L connu. Cela fut développé par DIDAY dans "Classification Automatique de données", Ed. DUNOD, 1989, pages 66 à 77.

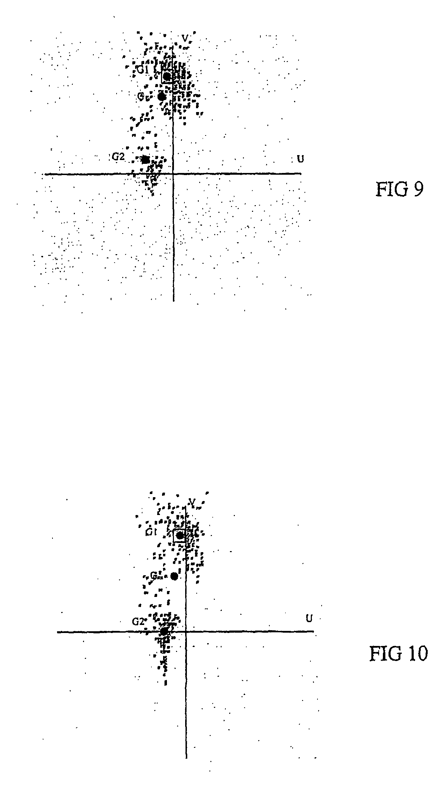

Un nuage de points dans l'espace d'étude est constitué généralement de deux principaux ensembles au niveau d'une discontinuité ainsi que cela apparaît sur les figures 9 à 12. Le calcul du centre de gravité G du nuage donne une vitesse moyenne qui ajuste mal le nuage. Pour repérer les deux tendances dynamiques ou ensembles principaux du nuage, on effectue le processus suivant.

On commence sur une représentation $L_o$ dans laquelle les centres $G_1$ et $G_2$ sont très proches du centre de gravité G de la totalité du nuage contenant nb points.

$$\overline{G}_1 = \overline{G} + \bar{\varepsilon} \text{ et } \overline{G}_2 = \overline{G} - \bar{\varepsilon}$$

où $\bar{\varepsilon}$ est un vecteur vitesse très petit.

Initialisation des termes nécessaires au calcul du centre G2 :

$$nb2=0 \qquad Su2=0 \qquad Sv2=0$$

Initialisation du compteur k: k = 0

DEBUT

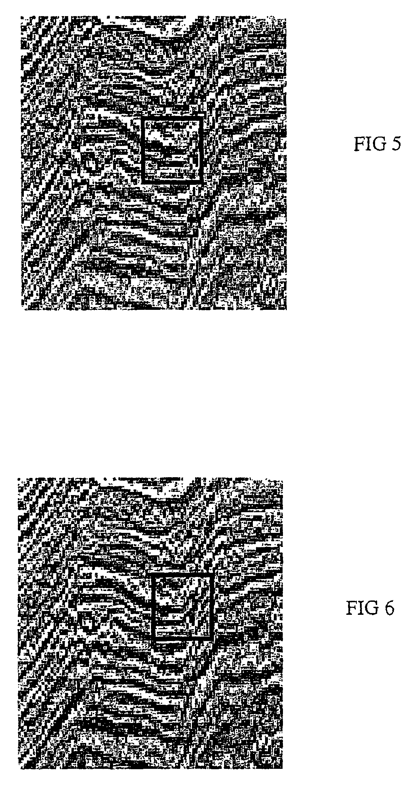

Sur la section sismique de la figure 1, on déplace une fenêtre F de calcul au travers d'une faille et qui occupe successivement les positions des figures 5 à 8.

Pour la position de la fenêtre F de la figure 5, il correspond le nuage de points de la figure 9 qui représente les centres de gravité G, $G_1$ et $G_2$ qui ont été calculés selon le processus ci-dessus.

Pour la position de la fenêtre F de la figure 6, on obtient le nuage de points représenté sur la figure 10 avec son centre G, les deux tendances du nuage étant correctement représentées dans l'état de convergence par les centres de gravité $G_1$ et $G_2$.

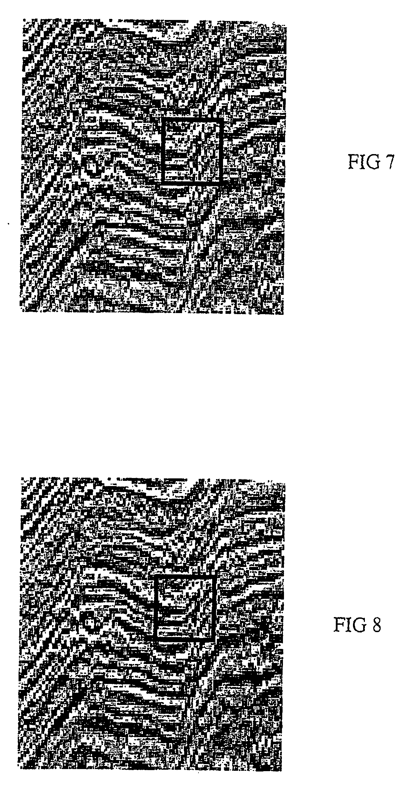

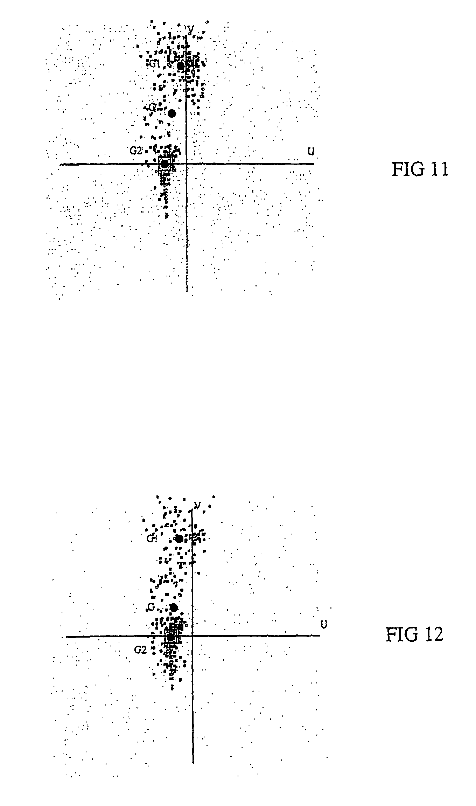

De la même façon, pour la position de la fenêtre F de la figure 7, on obtient un nuage de points de centre de gravité G et les deux tendances principales dudit nuage bien séparées et correctement représentées par les centres de gravité $G_1$ et $G_2$ (figure 11) ; pour la position de la fenêtre de la figure 8 on obtient la représentation de la figure 12.

Une fois que les deux tendances principales sont repérées par leurs centres de gravité respectifs, on attribue au pixel central de la fenêtre F considérée et à partir de laquelle a été construit le nuage, la tendance prépondérante $G_p$ qui regroupe le plus grand nombre de points. C'est ainsi que pour le nuage de points de la figure 9, la tendance prépondérante qui est attribuée au pixel central de la fenêtre F de la figure 5 est la tendance du haut et représentée par son centre de gravité $G_1$, encadré sur la figure 9. On fait de même pour chaque pixel central de fenêtre F correspondant aux positions des figures 6 à 8, les tendances prépondérantes étant représentées par leur centre de gravité G$_1$ ou G$_2$, encadré sur les figures 10 à 12.

Une telle sélection conduit à une estimation pertinente basée sur au moins la moitié des points du nuage et permet de simplifier le flux tout en accentuant ses discontinuités, car l'estimation prépondérante G$_p$ est significative du fait qu'elle estime correctement la vitesse du point considéré qui correspond au centre de la fenêtre.

En se reportant à nouveau aux figures 5 à 12, on constate que lorsque la fenêtre F recouvre une faille, comme c'est le cas dans l'exemple de la section sismique de la figure 1 et partiellement reproduite sur les figures 5 à 8, l'espace des vitesses se scinde en deux. Lorsqu'on transite progressivement de la position de la fenêtre F de la figure 5 à la figure 8, les nuées de points dynamiques séparent correctement l'espace des vitesses même lorsque l'une des deux tendances principales est largement majoritaire, comme c'est le cas sur les figures 9 et 12. De ce fait, le côté gauche de la faille reçoit une estimation prépondérante G$_1$ pratiquement constante (figures 9 et 10), alors que le côté droit de la faille recevra une estimation prépondérante G$_2$ sensiblement constante (figures 11 et 12). Le flux résultant est, par conséquent, presque constant en bordure de faille.

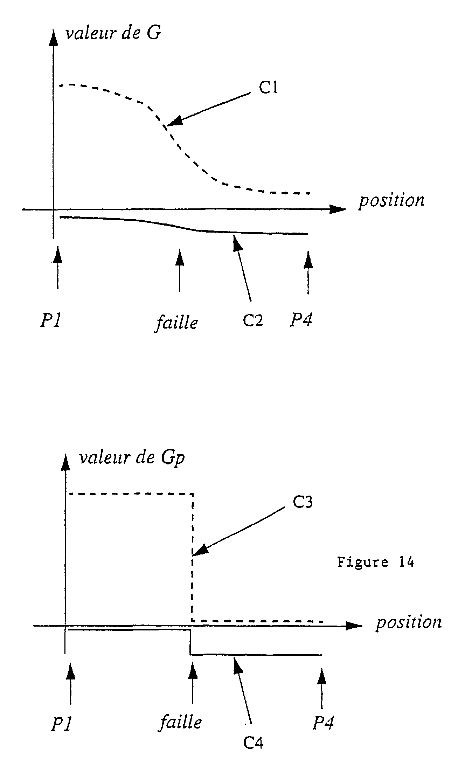

Si on avait effectué un simple lissage moyenne sur uniquement le centre de gravité G de chaque nuage de points le long d'une trajectoire intersectant la faille et déterminée par les extrémités P$_1$ et P$_4$, on aurait obtenu un champ de vitesses lisse aux contours mal définis, ainsi que cela est représenté sur la figure 13. La courbe en pointillés C$_1$ représente la valeur de la vitesse moyenne G en fonction de la position des points de la trajectoire entre P$_1$ et P$_4$, la variation de G étant progressive entre P$_1$ et P$_4$. Le contour associé de la faille est donné par la courbe C$_2$. On constate qu'il est difficile de positionner une rupture.

Au contraire, le lissage par nuées dynamiques selon la présente invention, homogénéise le flux optique dans chacune des zones situées de part et d'autre de la faille et accentue les contours de ladite faille comme le montre la figure 14 où on peut voir que la courbe C$_3$ représentant l'évolution de la tendance prépondérante G$_p$ le long de la même trajectoire, entre les points P$_1$ et P$_4$, présente des changements brusques. Il faut noter que la vitesse G$_p$ localement retenue est presque constante de part et d'autre de la faille et elle change brutalement au niveau de ladite faille. Cela se voit clairement sur la courbe C$_4$ où l'on constate un contour échelon précis et facilement détectable.

Les contours échelons ainsi créés à chaque fois sont localisés par le calcul de la variance sur le flux traité, effectué à l'aide de la formule suivante :

$$v = \sum_{k=1}^{nb} \left[ \left( v_k - \bar{v} \right)^2 + \left( u_k - \bar{u} \right)^2 \right]$$

dans laquelle :

u$_k$ et v$_k$ sont les composantes des nb vecteurs vitesses contenus dans le voisinage H pris en considération, le voisinage H contenant nb points et étant centré sur le point sur lequel la variance est calculée.

A l'aide d'un exemple de réalisation, on va montrer l'importance de la présente invention.

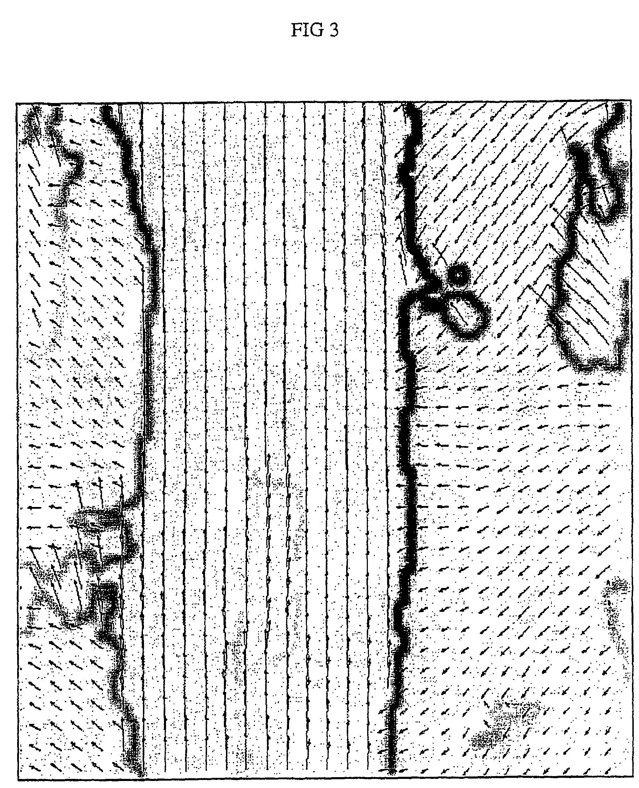

La section sismique de la figure 1 est traversée par deux failles principales qui sont le lieu d'un front de mouvement. Le calcul du flux optique brut sur l'image de la figure 2 montre que les variations spatiales du flux optique brut sont trop importantes pour que la variance calculée sur ledit flux optique brut permette de délimiter correctement lesdites failles. Le lissage non supervisé par nuées dynamiques atténue les variations spatiales du flux optique en dehors des discontinuités et les accentue au niveau de celles-ci, comme le montre la figure 3 sur laquelle les contours sont nets au niveau desdites failles, l'intensité représentant la variance calculée sur les flux optiques respectifs ; plus le pixel est foncé et plus la variance est importante.

Sur la figure 4, on a représenté la variance du flux optique lissé surimposée sur la section de la figure 1 dont le contraste a été atténué, ladite variance mettant en valeur des frontières significatives qui, pour la plupart, définissent lesdites failles.

Parmi les avantages de la présente invention qui découlent de la description donnée ci-dessus, on peut citer celui résidant dans le fait qu'on peut cerner dans une section sismique ou une image donnée les points susceptibles de définir des discontinuités telles que des failles, et donc servir de guide à l'interprétateur lors de l'élaboration du modèle géologique.

En outre, l'utilisation conjuguée du flux optique et du lissage par nuées dynamiques permet de déterminer une segmentation utile des données sismiques et constitue, de ce fait, une aide efficace à l'interprétation des sections sismiques par exemple.

**Revendications**

1. Méthode de détection d'une discontinuité géologique dans un bloc sismique, **caractérisée en ce qu'**elle consiste à :

   - sélectionner dans le bloc sismique au moins une section comprenant au moins une discontinuité, ladite section constituant une image sismique,
   - calculer un flux optique brut sur ladite image sismique de manière à obtenir une première représentation du flux optique dans laquelle la discontinuité constitue un front de mouvement, et à
   - lisser par le procédé des nuées dynamiques non supervisé ladite représentation du flux optique, de manière à obtenir une deuxième représentation du flux optique dans laquelle ladite discontinuité présente des contrastes accentués.

2. Méthode selon la revendication 1, **caractérisée en ce qu'**elle consiste en outre à localiser les bords de ladite discontinuité au moyen d'un calcul de variance effectué sur la deuxième représentation du flux optique.

3. Méthode selon la revendication 1, **caractérisée en ce que** le calcul du flux optique brut utilise le gradient d'intensité.

4. Méthode selon les revendications 1 ou 3, **caractérisée en ce que** les composantes du flux optique sont calculées en tout point de l'image sismique par le procédé du champ constant.

**Claims**

1. Method of detecting a geological discontinuity in a seismic block, **characterized in that** it consists in:

   - selecting within the seismic block at least one section comprising at least one discontinuity, the said section constituting a seismic image,
   - calculating a raw optical flow over the said seismic image so as to obtain a first representation of the optical flow, in which the discontinuity constitutes a moving front, and in
   - smoothing the said representation of the optical flow by the unsupervised process of dynamic clusters so as to obtain a second representation of the optical flow, in which the said discontinuity exhibits enhanced contrasts.

2. Method according to Claim 1, **characterized in that** it furthermore consists in locating the edges of the said discontinuity by means of a variance calculation performed on the second representation of the optical flow.

3. Method according to Claim 1, **characterized in that** the calculation of the raw optical flow uses the intensity gradient.

4. Method according to Claim 1 or 3, **characterized in that** the components of the optical flow are calculated at every point of the seismic image by the constant-field process.

**Patentansprüche**

1. Verfahren zum Auffinden einer geologischen Diskontinuität in einem seismischen Block, **gekennzeichnet durch** folgende Schritte:

   - Auswahl wenigstens eines Bereiches in dem seismischen Block, der wenigstens eine Unstetigkeit aufweist, wobei dieser Bereich ein seismisches Bild darstellt,
   - Berechnung eines optischen Roh-Flusses auf diesem seismischen Bild, um eine erste Darstellung des optischen Flusses zu erhalten, in der die Diskontinuität eine Bewegungsfront darstelit und
   - Glätten der Darstellung des optischen Flusses **durch** ein unüberwachtes Verfahren dynamischer Cluster (ein "k-means clustering"-ähnliches Verfahren), um eine zweite Darstellung des optischen Flusses zu erhalten, in der die Diskontinuität hervorgehobene Kontraste darstellt.

2. Verfahren nach Anspruch 1,

**dadurch gekennzeichnet, dass**
als weiterer Schritt das Auffinden der Kanten der Diskontinuität mittels einer auf der zweiten Darstellung des optischen Flusses durchgeführten Varianz-Berechnung erfolgt.

3. Verfahren nach Anspruch 1,
**dadurch gekennzeichnet, dass**
die Berechnung des optischen Roh-Flusses den Gradienten der Intensität benutzt.

4. Verfahren nach einem der Ansprüche 1 bis 3,
**dadurch gekennzeichnet, dass**
die Komponenten des optischen Flusses an jedem Punkt des seismischen Bildes durch das Verfahren des konstanten Felds berechnet werden.

FIG 1

FIG 4

FIG 2

FIG 3

FIG 5

FIG 6

FIG 7

FIG 8

FIG 9

FIG 10

FIG 11

FIG 12

*valeur de G*

*position*

C1

P1    faille    C2    P4

*valeur de Gp*

*position*

C3

Figure 14

P1    faille    C4    P4